# EUROPÄISCHE PATENTSCHRIFT

(11) **EP 0 599 242 B1**
(45) Veröffentlichungstag und Bekanntmachung des Hinweises auf die Patenterteilung: **09.07.1997**
(21) Anmeldenummer: 93118755.3
(22) Anmeldetag: 22.11.1993
(51) Int. Cl.: B65D 90/04

(54) **Abdichtung für Ingenieurbauten**
Seal for civil engineering works
Garniture d'étanchéité pour ouvrages d'art

(30) Priorität: 20.11.1992 DE 4239067
(43) Veröffentlichungstag der Anmeldung: 01.06.1994
(73) Patentinhaber: ZETA Stiftung, FL-9490 Vaduz (LI)
(72) Erfinder: Messinger, Hermann, D-53859 Niederkassel (DE)
(74) Vertreter: Müller-Gerbes, Margot, Dipl.-Ing.

(56) Entgegenhaltungen:
- WO-A-90/02089
- BE-A- 828 908
- CH-A- 408 778
- DE-A- 2 737 723
- FR-A- 1 590 183

## Beschreibung

Die Erfindung betrifft eine Abdichtung für Ingenieurbauten aus zu verschweißenden plattenförmigen Elementen aus korrosionsfesten Blechen, wie zum Beispiel Edelstahlblechen, und rohrförmigen perforierten Prüfleitungen, die an einer festen konstruktiven Unterschicht, wie zum Beispiel einer Betonschicht, angebracht wird, wobei die Prüfleitungen zwischen der festen Unterschicht und den plattenförmigen Elementen so verlaufen, daß sich mindestens entlang jeder Stoßstelle benachbarter Elemente mindestens eine Prüfleitung befindet, und die einzelnen plattenförmigen Elemente derart miteinander verschweißt sind, daß sie im Bereich der Stoßstellen auf der dem abzudichtenden Raum zugewandten Seite miteinander bündig abschließen und die Prüfleitungen ein miteinander vernetztes Prüfleitungssystem bilden.

Des weiteren betrifft die Erfindung ein Verfahren zur Installation einer Abdichtung für Ingenieurbauten aus zu verschweißenden plattenförmigen Elementen aus korrosionsfesten Blechen, wie zum Beispiel Edelstahlblechen, die rohrförmige perforierte Prüfleitungen aufweist,
a) die Prüfleitungen auf einer festen konstruktiven Unterschicht befestigt werden,
b) ein Estrich auf die Unterschicht aufgetragen wird, so daß die Oberfläche der Estrichschicht bündig mit der Außenseite der Oberwandung der Prüfleitungen abschließt,
c) ein Klebstoff auf die von der Estrichschicht und der Außenseite der Oberwandung gebildete erste Oberfläche aufgetragen und glatt gestrichen wird, so daß man eine ebene zweite Oberfläche erhält,
d) die einzelnen plattenförmigen Elemente auf die zweite Oberfläche aufgelegt werden, so daß die Randkanten der Elemente im wesentlichen entlang der Prüfleitungen (2) verlaufen und
e) die einzelnen jeweils benachbarten plattenförmigen Elemente und das Schutzgas verschweißt werden.

Mit Abdichtungen für Ingenieurbauten, mit deren Hilfe beispielsweise Räumlichkeiten, in denen sich Industrietanks befinden, abgedichtet werden, dienen dem Schutz der Umwelt bei Leckagen an dem betreffenden Tank.

Aus der WO-A-90 02089 ist bereits eine gattungsgemäße Abdichtung und ein Verfahren zum Herstellen einer Abdichtung für Ingenieurbauten mit der Möglichkeit des Prüfens der Dichtigkeit der Abdichtung bekannt. Gemäß diesem Verfahren wird auf eine feste, konstruktive Unterschicht, z.B. eine Betonschicht, eine Abdichtungsschicht, die aus rechteckigen plattenförmigen Elementen aus korrosionsfesten Blechen besteht, aufgebracht. Die einzelnen plattenförmigen Elemente werden dazu an ihren beiden Längsseiten nach oben umgekantet, so daß nach dem Zusammenfügen der einzelnen auf der Unterschicht befindlichen Elemente zwischen ihnen ein in den abzudichtenden Raum hineinragender Kanal mit dreieckigem Querschnitt entsteht. Vor dem Verschweißen der plattenförmigen Elemente werden in diese Kanäle perforierte Prüfleitungen mit sehr kleinen Löchern oder Schlitzen in den Rohrwandungen eingelegt. Diese Prüfleitungen dienen sowohl zur Versorgung der Stoßstellen mit Schutzgas während des Schutzgasschweißens als auch zum Einbringen eines Prüfgases in die entsprechenden Kanäle, um nach dem Schweißen die Dichtigkeit der Schweißnähte prüfen zu können. Die Verbindung der beiden kürzeren Seiten der plattenförmigen Elemente mit dem jeweils benachbarten Element erfolgt unter Verwendung einer in die feste Unterschicht eingearbeiteten Nut. Nach Einlegen einer Prüfleitung in diese Nut werden zwei nach unten abgewinkelte Randstreifen der jeweils benachbarten plattenförmigen Elemente in die Nut eingeführt und anschließend miteinander verschweißt.

Für die Ausführung von Stumpfschweißnähten der plattenförmigen Elemente werden hutförmige Profilleisten mit Längsrillen auf dem Mittelsteg eingesetzt, wobei die Längsrillen zu Prüfleitungen geschlossen werden und die plattenförmigen Elemente auf der Profilleiste mit ihrem Stoß vor dem Verschweißen aufgeklebt werden.

Die diversen Prüfleitungen werden bei dem bekannten Verfahren in einzelnen Abschnitten verlegt und jeweils mit separaten Anschlüssen zur Schutzgas- bzw. Prüfgasversorgung versehen.

Wird eine Abdichtung gemäß dem Stand der Technik in Räumen mit begehbaren Flächen angeordnet, so können die in den abzudichtenden Raum hineinragenden aufgekanteten Verbindungsränder, in denen die Prüfleitungen verlaufen, zu einem erheblichen Stolper- und somit Sicherheitsrisiko für das betroffene Personal werden.

Es ist daher die Aufgabe der vorliegenden Erfindung, eine Abdichtung für Ingenieurbauten sowie eine Verfahrensweise zur Installation einer Abdichtung für Ingenieurbauten zu schaffen, bei der die plattenförmigen Elemente mittels Stumpfschweißnähten verbindbar sind, die in kurzer Zeit montier- bzw. nachrüstbar ist und keinerlei Verletzungsrisiko für Personal, das in den Räumen tätig ist, darstellt. Außerdem soll die Abdichtung ausreichende Festigkeitseigenschaften für eine Befahrbarkeit durch Kraftfahrzeuge aufweisen.

Diese Aufgabe wird bei einer gattungsgemäßen Abdichtung gemäß der Ausbildung mit den Merkmalen des Anspruchs 1 sowie bei einem Verfahren gemäß der Weiterbildung nach den Merkmalen des Anspruch 5 gelöst.

Weitere Ausgestaltungen der Erfindung werden durch die jeweiligen Unteransprüche gekennzeichnet.

Zur Lösung der Aufgabe wird für die Abdichtung vorgeschlagen, daß als Prüfleitung Edelstahlrohre mit rechteckigem Querschnitt vorgesehen sind und daß miteinander fluchtend korrespondierende Begasungsöffnungen in den plattenförmigen Elementen und in den Prüfleitungen auf der den plattenförmigen Elementen zugewandten Seite angeordnet sind.

Insbesondere ist vorgesehen, daß an den Seitenwandungen der Prüfleitung mittels Halteschweißnaht Winkelstücke angebracht sind, die der Befestigung der Prüfleitung auf der Unterschicht dienen.

Durch die Ausbildung der Prüfleitungen mit rechteckigem Querschnitt und den Winkelstücken ist eine hinreichende mechanische Stabilität des Prüfsystems gegeben.

In weiterer Ausgestaltung der Erfindung sind die Prüfleitungen zu einzelnen modularen Prüfleitungsbaugruppen als geschlossener rechteckiger Prüfleitungsrahmen oder U-förmige Baugruppe zusammengesetzt sind, die jeweils mindestens eine Anschlußvorrichtung aufweisen, mit deren Hilfe sie mit den benachbarten Prüfleitungsbaugruppen so verbunden werden können, daß ein an einer Stelle in das Prüfleitungssystem eingeleitetes Gas jede beliebige andere Stelle in dem Prüfleitungssystem erreichen kann. Somit bilden die Prüfleitungen ein miteinander vernetztes Prüfleitungssystem, die zwischen der festen Unterschicht und den plattenförmigen Elementen so verlaufen, daß sich mindestens entlang jeder Stoßstelle benachbarter Elemente eine Prüfleitung befindet, und daß die einzelnen plattenförmigen Elemente derart miteinander verschweißt sind, daß sie im Bereich der Stoßstellen auf der dem abzudichtenden Raum zugewandten Seite miteinander bündig abschließen.

Ein erfindungsgemäßes vernetztes Prüfleitungssystem kann z.B. in modularer Art und Weise aufgebaut sein. Dabei wird das Prüfleitungssystem aus einzelnen rechteckigen Rahmen, den Modulen, zusammengesetzt. Jeder dieser Rahmen weist mehrere Anschlußstellen auf, mit deren Hilfe er mit den jeweils benachbarten Rahmen verbunden wird. Somit kann das von einer einzigen Außenanschlußstelle dem Prüfleitungssystem zugeführte Schutz- bzw. Prüfgas von Rahmen zu Rahmen strömen und jede Stelle im Rohrleitungssystem erreichen.

Zusätzlich zur Zeitersparnis aufgrund der nicht mehr vorhandenen, separat mit Gas zu versorgenden Prüfleitungsabschnitte bringt die vorliegende Erfindung einen weiteren Zeitvorteil, nämlich die Möglichkeit, die modularen Rahmenelemente des Prüfleitungssystems vorzufertigen, so daß dieser Arbeitsschritt nicht am Orte des abzudichtenden Raumes erfolgen muß. Die Rahmenelemente werden in vorgefertigter Form zum Installationsort transportiert, dort oberhalb der festen Unterschicht des Bodens montiert und anschließend mit den zu verschweißenden plattenförmigen Elementen versehen. Schon während der Montage der erfindungsgemäßen Abdichtung wird die Gefahr von Arbeitsunfällen erheblich reduziert, da keine Stolperkanten in den abzudichtenden Raum hineinragen, sondern die einzelnen plattenförmigen Elemente bündig miteinander abschließen.

Eine besondere Wirkung wird erzielt, wenn die in den Prüfleitungen befindlichen Begasungsöffnungen alternierend rechts und links seitlich neben der Stoßstelle jeweils benachbarter plattenförmiger Elemente angeordnet werden, so daß sie mit korrespondierenden Öffnungen in den plattenförmigen Elementen selbst fluchten. Aufgrund dieser Ausgestaltung kann das Schutzgas während des Schweißens auf die dem abzudichtenden Raum zugewandte Seite der plattenförmigen Elemente gelangen und somit dort eine die entstehende Schweißnaht besonders gut abschirmende Schutzgasatmosphäre schaffen. Dieser als Formierung der Schweißnaht bezeichnete Prozeß ermöglicht es, für die plattenförmigen Elemente auch Werkstoffe zu verwenden, die beim Schweißen unter normaler Umgebungsatmosphäre bereits bei relativ geringen Temperaturen oxidieren, wie z.B. Titan bei ca. 600° C. Nach dem Verschweißen der plattenförmigen Elemente werden die mit den Begasungsöffnungen in den Prüfleitungen korrespondierenden Öffnungen in den plattenförmigen Elementen so zugeschweißt, daß die Öffnungen in den Prüfleitungen nicht verschlossen werden, und anschließend ebenso wie die Schweißnähte selbst durch Einleiten eines Prüfgases in die Prüfleitungen auf Dichtigkeit geprüft. Aufgrund der formierten Schweißung erhalten die Schweißnähte eine besonders gute Korrosionssicherheit.

Nachfolgend wird die Erfindung beispielhaft anhand der Figuren beschrieben.

Es zeigen:
- **Fig. 1**: einen Schnitt durch eine erfindungsgemäße Abdichtung mit einer zwischen einem Betonboden und zwei plattenförmigen Elementen angeordneten Prüfleitung und
- **Fig. 2**: eine Ansicht auf die Prüfleitung gemäß Fig. 1, wenn dort die plattenförmigen Elemente entfernt werden (da die Länge der Prüfleitung nicht maßstabsgetreu dargestellt wird, wird diese Ansicht in Längsrichtung der Prüfleitung unterbrochen gezeigt).

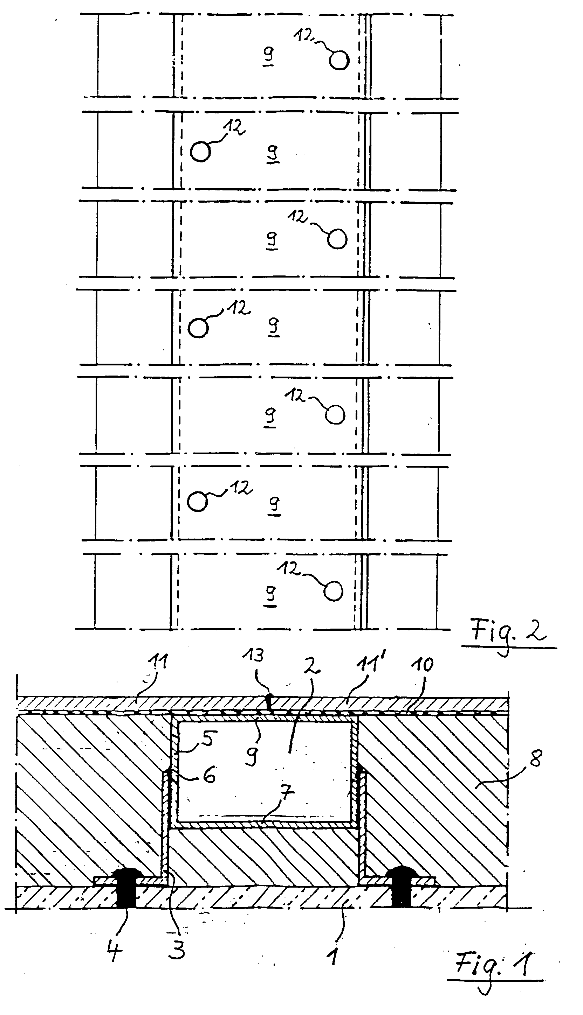

In Figur 1 ist eine als feste Unterschicht dienende Betonschicht 1 dargestellt, auf der die Prüfleitung 2 mittels der Winkelstücke 3 sowie der Schrauben 4 befestigt ist. Die Schrauben 4 erhalten mit Hilfe von nicht dargestellten Dübeln einen festen Sitz in der Betonschicht 1. Die Prüfleitung 2 besteht aus einem Edelstahlrohr mit rechteckigem Querschnitt der Abmessung 50 mm x 30 mm und einer Wanddicke von 1,5 mm. Die Prüfleitung 2 ist an ihren Seitenwandungen 5 mittels der Halteschweißnaht 6 mit den Winkelstücken 3 verbunden. Zwischen der Unterwandung 7 der Prüfleitung 2 und der Betonschicht 1 befindet sich ein Zwischenraum, so daß die Prüfleitung 2 nicht auf der Betonschicht 1 aufliegt. Die beiden Winkelstücke 3 sind in Längsrichtung der Prüfleitung 2 in einem solchen Abstand zu den jeweils nächsten Winkelstücken angebracht, daß eine hinreichende mechanische Stabilität des Prüfleitungssystems gegeben ist.

Mit Hilfe der oben beschriebenen Befestigungsmittel wird auf der Betonschicht 1 ein miteinander vernetztes System aus Prüfleitungen 2 installiert. Die einzelnen Baugruppen dieses Systems können dabei unterschiedlich aufgebaut sein. Es kann sich beispielsweise um geschlossene Rechteckrahmen, die mehrere Anschlußstutzen zur Verbindung mit den jeweils benachbarten Prüfleitungsbaugruppen aufweisen, oder um U-förmige Baugruppen handeln, die mit den beiden freien Enden der beiden U-Schenkel an benachbarte Baugruppen des Prüfleitungssystems angeschlossen werden können. Im übrigen werden jeweils diejenigen Baugruppenformen verwendet, die den jeweiligen Geometrieverhältnissen des abzudichtenden Raumes am ehesten gerecht werden.

Nach Befestigung des Prüfleitungssystems auf der Betonschicht 1 wird auf letztere ein Estrich 8 derart aufgetragen, daß er bündig mit der Außenseite der Oberwandung 9 der Prüfleitungen 2 abschließt. Dabei wird auch der Zwischenraum zwischen der Bodenwandung 7 der Prüfleitung 2 und der Betonschicht 1 mit dem Estrich 8 aufgefüllt. Anschließend wird auf den Estrich 8 bzw. die Oberwandung 9 der Prüfleitung 2 ein elastischer Klebstoff 10, z.B. Silikon oder Reaktionsharze, aufgetragen und glattgestrichen. Auf diese Schicht werden dann die plattenförmigen Elemente z.B. in Form von Edelstahlplatten, Aluminium-, Kupfer- oder Bleielementen aufgelegt. Bei der in Fig. 1 dargestellten Ausführungsform der Erfindung werden als plattenförmige Elemente Edelstahl-Riffelbleche 11, 11' verwendet, die auf ihrer dem abzudichtenden Raum zugewandten Seite eine rutschfeste Riffelung aufweisen.

Die beiden benachbarten Edelstahl-Riffelbleche 11, 11' werden so auf den Klebstoff 10 aufgelegt, daß ihre Stoßstelle im wesentlichen entlang und oberhalb der Mitte der Oberwandung 9 der Prüfleitung 2 verläuft. Anschließend werden zusätzlich zu den ohnehin schon in den Prüfleitungen 2 vorhandenen Perforationsbohrungen abwechselnd rechts und links neben der Stoßstelle die Begasungsbohrungen 12 mit einem Durchmesser von z.B. 5 mm und einem Versatz in Längsrichtung der Prüfleitungen 2 von ca. 100 mm gesetzt. Sie verlaufen durch das jeweilige Edelstahl-Riffelblech 11, 11', den Klebstoff 10 sowie die Oberwandung 9 der Prüfleitung 2 und ermöglichen somit das Ausströmen eines in die Prüfleitung 2 eingeleiteten Schutzgases in den abzudichtenden Raum. In der so im Bereich der Stoßstelle geschaffenen Schutzgasatmosphäre erfolgt dann die Verschweißung der beiden Edelstahl-Riffelbleche 11, 11'. Der in den Edelstahl-Riffelblechen 11, 11' verlaufende Teil der Begasungsbohrungen 12 wird anschließend im Rahmen einer Lochschweißung zugeschweißt. Zusätzlich zu den seitlich versetzten Begasungsbohrungen 12 können derartige Bohrungen auch mittig in der Oberwandung 9 der Prüfleitung 2 angeordnet sein, so daß die Stoßstelle direkt durch den Klebstoff 10 hindurch mit Schutzgas versorgt wird.

Das Prüfen der Dichtigkeit der die beiden Edelstahl-Riffelbleche 11, 11' verbindenden Schweißnaht 13 bzw. der Lochschweißungen erfolgt durch Einleiten eines entsprechenden Prüfgases in das Prüfleitungssystem und somit in jede vorhandene Prüfleitung 2. Mit Hilfe eines entsprechenden Detektors oder eines Prüfschaumes kann festgestellt werden, ob die abdichtende Schicht aus Edelstahl-Riffelblechen durchlässig ist oder nicht. Es ist in diesem Zusammenhang darauf hinzuweisen, daß der verwendete Klebstoff 10 von dem Schutz- bzw. Prüfgas durchsetzt werden kann.

Die erfindungsgemäße Abdichtung kann auch im Bereich nicht horizontaler Wandungen der abzudichtenden Räume, z.B. im Bereich von Abflußrinnen oder dergleichen, verwendet werden.

## Patentansprüche

1. Abdichtung für Ingenieurbauten aus zu verschweißenden plattenförmigen Elementen (11, 11') aus korrosionsfesten Blechen, wie zum Beispiel Edelstahlblechen, und rohrförmigen perforierten Prüfleitungen (2), die an einer festen konstruktiven Unterschicht (1), wie zum Beispiel einer Betonschicht, angebracht wird, wobei die Prüfleitungen (2) zwischen der festen Unterschicht (1) und den plattenförmigen Elementen (11, 11') so verlaufen, daß sich mindestens entlang jeder Stoßstelle benachbarter Elemente (11, 11') mindestens eine Prüfleitung (2) befindet, und die einzelnen plattenförmigen Elemente (11, 11') derart miteinander verschweißt sind, daß sie im Bereich der Stoßstellen auf der dem abzudichtenden Raum zugewandten Seite miteinander bündig abschließen und die Prüfleitungen ein miteinander vernetztes Prüfleitungssystem bilden, **dadurch gekennzeichnet**, daß als Prüfleitung (2) Edelstahlrohre mit rechteckigem Querschnitt vorgesehen sind und daß miteinander fluchtend korrespondierende Begasungsöffnungen (12) in den plattenförmigen Elementen (11, 11') und in den Prüfleitungen (2) auf der den plattenförmigen Elementen (11, 11') zugewandten Seite angeordnet sind.

2. Abdichtung nach Anspruch 1,
**dadurch gekennzeichnet**, daß die Begasungsöffnungen (12) alternierend rechts und links seitlich neben der Stoßstelle jeweils benachbarter plattenförmiger Elemente (11, 11') liegen.

3. Abdichtung nach Anspruch 1,
**dadurch gekennzeichnet**, daß an den Seitenwandungen (5) der Prüfleitung (2) mittels Halteschweißnaht (6) Winkelstücke (3) angebracht sind, die der Befestigung der Prüfleitung (2) auf der Unterschicht (1) dienen.

4. Abdichtung nach einem der Ansprüche 1 bis 3,
**dadurch gekennzeichnet**, daß die Prüfleitungen (2) zu einzelnen modularen Prüfleitungsbaugruppen als geschlossener rechteckiger Prüfleitungsrahmen oder U-förmige Baugruppe zusammengesetzt sind, die jeweils mindestens eine Anschlußvorrichtung aufweisen, mit deren Hilfe sie mit den benachbarten Prüfleitungsbaugruppen so verbunden werden können, daß ein an einer Stelle in das Prüfleitungssystem eingeleitetes Gas jede beliebige andere Stelle in dem Prüfleitungssystem erreichen kann.

5. Verfahren zur Installation einer Abdichtung für Ingenieurbauten aus zu verschweißenden plattenförmigen Elementen (11, 11') aus korrosionsfesten Blechen, wie zum Beispiel Edelstahlblechen, die rohrförmige perforierte Prüfleitungen (2) aufweist, insbesondere einer Abdichtung nach den Ansprüchen 1 bis 4, bei dem
a) die Prüfleitungen auf einer festen konstruktiven Unterschicht (1) befestigt werden,
b) ein Estrich (8) auf die Unterschicht (1) aufgetragen wird, so daß die Oberfläche der Estrichschicht bündig mit der Außenseite der Oberwandung (9) der Prüfleitungen (2) abschließt,
c) ein Klebstoff (10) auf die von der Estrichschicht und der Außenseite der Oberwandung (9) gebildete erste Oberfläche aufgetragen und glatt gestrichen wird, so daß man eine ebene zweite Oberfläche erhält,
d) die einzelnen plattenförmigen Elemente (11, 11') auf die zweite Oberfläche aufgelegt werden, so daß die Randkanten der Elemente (11, 11') im wesentlichen entlang der Prüfleitungen (2) verlaufen und
e) die einzelnen jeweils benachbarten plattenförmigen Elemente (11, 11') und das Schutzgas verschweißt werden,
**dadurch gekennzeichnet**, daß zwischen den Schritten (d) und (e) Begasungsöffnungen (12) gesetzt werden, wobei die Begasungsöffnungen (12) durch die plattenförmigen Elemente (11, 11'), den Klebstoff (10) sowie die Oberwandungen (9) der Prüfleitungen (2) verlaufen und nach dem Schritt (e) die mit den Begasungsöffnungen (12) korrespondierenden Öffnungen in den plattenförmigen Elementen (11, 11') so zugeschweißt werden, daß die Öffnungen in den Prüfleitungen (2) nicht verschlossen werden.

6. Verfahren nach Anspruch 5,
**dadurch gekennzeichnet**, daß die Begasungsöffnungen (12) alternierend rechts- und links seitlich neben der Stoßstelle jeweils benachbarter plattenförmiger Elemente (11, 11') gesetzt werden.

7. Verfahren nach Anspruch 5,
**dadurch gekennzeichnet**, daß beim Auftragen des Estrichs (8) auf die Unterschicht (1) auch der Zwischenraum zwischen der Bodenwandung (7) der Prüfleitung (2) und der Unterschicht (1) mit dem Estrich (8) aufgefüllt wird.

## Claims

1. Seal for civil engineering works consisting of to-be-welded plate-like elements (11, 11') made of corrosion-resistant sheets, such as for example stainless steel sheets, and tubular perforated test lines (2), attached to a solid structured sublayer (1), such as for example a concrete layer, with the test lines (2) running between the solid sublayer (1) and the plate-like elements (11, 11') in a way that along at least each seam of neighbouring elements there is at least one test line (2), and the individual plate-like elements (11, 11') being welded together in a way that they end flush with each other at the seams at the side facing the space to be sealed, and the test lines forming a test line network,
**characterized in that** stainless steel tubes with a rectangular cross-section are provided for as test lines (2) and that apertures for the gas feed (12) in corresponding alignment with each other are arranged in the plate-like elements (11, 11') and in the test lines (2) at the side facing the plate-like elements.

2. Seal according to claim 1,
**characterized in that** the apertures for the gas feed (12) are alternately situated to the left and to the right side next to the seam of the respectively neighbouring plate-like elements (11, 11').

3. Seal according to claim 1,
**characterized in that** angle plates (3) which fasten the test line (2) to the sublayer (1) are fixed to the side walls (5) of the test line (2) by means of a seam weld (6).

4. Seal according to one of the claims 1 to 3,
**characterized in that** the test lines (2) are assembled in individual modular test line groups in the form of a closed rectangular test line frame or U-shaped group, having respectively at least one connection facility with the help of which they can be connected to the neighbouring test line groups in a way that gas fed into the test line system at one point can reach any other point of the test line system.

5. Method for the installation of a seal for civil engineering works consisting of to-be-welded plate-like elements (11, 11') made of corrosion-resistant sheets, such as stainless steel sheets for example, which has tubular perforated test lines (2), especially of a seal according to the claims 1 to 4, with
a) the test lines being fastened to a solid structural sublayer (1),
b) a floor finish (8) being applied to the sublayer (1) so that the surface of the floor finish layer ends flush with the outside of the upper wall (9) of the test lines (2),
c) adhesive (10) being applied to the first surface formed by the floor-finish layer and the outside of the upper wall (9) and smoothed so that a level second surface results thereof,
d) the individual plate-like elements (11, 11') being placed upon the second surface so that the lateral edges of the elements (11, 11') essentially tun along the test lines (2) and
e) the individual respectively neighbouring plate-like elements (11, 11') being welded by means of protective inert gas,
**characterized in that** between steps (d) and (e), apertures for the gas feed (12) are placed, with said apertures for the gas feed (12) running through the plate-like elements (11, 11'), the adhesive (10) as well as the upper walls (9) of the test lines (2), and that after step (e), the apertures in the plate-like elements (11, 11') corresponding to the apertures for the gas feed (12) are closed by means of welding in a way that the apertures in the test lines not be closed.

6. Method according to claim 5,
**characterized in that** the apertures for the gas feed (12) are alternately placed to the right and left side next to the seam of the respective neighbouring plate-like elements (11, 11').

7. Method according to claim 5,
**characterized in that** when applying the floor finish (8) to the sublayer (1), the space between the lower wall (7) of the test line (2) and the sublayer (1) is also filled with the floor finish (8).

## Revendications

1. Etanchéité pour constructions civiles constituées d'éléments en forme de plaques a souder (11, 11') en tôles résistant à la corrosion, telles que par exemple des tôles d'acier inoxydable, et de tuyauteries de contrôle perforées (2) tubulaires, qui sont appliquées sur un substrat solide (1), tel que par exemple une couche de béton, les tuyauteries de contrôle (2) s'étendant de telle manière entre le substrat solide (1) et les éléments en forme de plaques (11, 11') que, au moins une tuyauterie de contrôle (2) se trouve au moins le long de chaque joint d'éléments adjacents (11, 11') et que les différents éléments en forme de plaques (11, 11') sont soudés de telle manière entre eux que, à proximité des joints, ils se terminent avec affleurement mutuel du côté du volume à étanchéifier et que les tuyauteries de contrôle (2) forment un réseau de tuyauteries de contrôle, caractérisé en ce que, comme tuyauteries de contrôle (2), on utilise des tubes en acier inoxydable de section rectangulaire et en ce que des ouvertures correspondantes d'amenée de gaz (12), alignées les unes sur les autres, sont prévues dans les éléments en forme de plaques (11, 11') et dans les tuyauteries de contrôle (2) du côté faisant face aux éléments en forme de plaques (11, 11').

2. Etanchéité suivant la revendication 1, caractérisée en ce que les ouvertures d'amenée de gaz (12) se trouvent en alternance à gauche et à droite sur le côté des joints d'éléments adjacents en forme de plaques (11, 11').

3. Etanchéité suivant la revendication 1, caractérisée en ce que des équerres (3) sont fixées à l'aide de cordons de soudure (6) aux parois latérales de la tuyauterie de contrôle (2), lesquelles servent à fixer la tuyauterie de contrôle (2) sur le substrat (1).

4. Etanchéité suivant l'une des revendications 1 à 3, caractérisée en ce que les tuyauteries de contrôle (2) sont rassemblées en groupes modulaires individuels de tuyauteries de contrôle formant un cadre fermé rectangulaire ou un groupe constructif en forme de U, qui présentent chacun au moins un dispositif de raccordement, avec l'aide duquel ils peuvent être raccordés aux groupes adjacents de tuyauteries de contrôle de telle sorte que le gaz introduit à un endroit dans le système de tuyauteries de contrôle peut atteindre tout autre endroit du système de tuyauteries de contrôle.

5. Procédé d'installation d'une étanchéité pour constructions civiles constituées d'éléments en forme de plaques à souder (11, 11') en tôles résistant à la corrosion, telles que par exemple des tôles d'acier inoxydable, qui présente des tuyauteries de contrôle (2) perforées tubulaires, en particulier d'une étanchéité conforme aux revendications 1 à 4, pour laquelle
a) on fixe les tuyauteries de contrôle sur un substrat (1) solide,
b) on pose une chape (8) sur le substrat (1), de sorte que la surface de la chape se termine à niveau avec la face extérieure de la paroi supérieure (9) des tuyauteries de contrôle (2),
c) on applique et lisse une colle (10) sur la première surface formée par la chape et la face extérieure de la paroi supérieure (9), de sorte qu'on obtient une deuxième surface plane,
d) on applique les différents éléments en forme de plaques (11, 11') sur la deuxième surface, de sorte que les arêtes latérales des éléments (11, 11') s'étendent essentiellement le long des tuyauteries de contrôle (2) et
e) on soude ensuite les différents éléments adjacents en forme de plaques (11, 11') sous gaz inerte,
caractérisé en ce que, entre les étapes (d) et (e), on découpe des ouvertures d'amenée du gaz (12), les ouvertures d'amenée du gaz (12) traversant les éléments en forme de plaques (11, 11'), la colle (10) ainsi que les parois supérieures (9) des tuyauteries de contrôle (2) et en ce que, après l'étape (e), les ouvertures situées dans les éléments en forme de plaques (11, 11') correspondant aux ouvertures d'amenée du gaz (12) sont refermées par soudage de telle façon que les ouvertures dans les tuyauteries de contrôle (2) ne soient pas bouchées.

6. Procédé suivant la revendication 5, caractérisé en ce que les ouvertures d'amenée du gaz (12) sont placées en alternance à gauche et à droite à côté du joint entre éléments adjacents en forme de plaques (11, 11').

7. Procédé suivant la revendication 5, caractérisé en ce que, lors de la pose de la chape (8) sur le substrat (1), l'espace intermédiaire entre la paroi inférieure (7) de la tuyauterie de contrôle (2) et le substrat (1) est également rempli par la chape (8).
